# EUROPEAN PATENT APPLICATION

(11) **EP 4 394 636 A1**
(43) Date of publication of application: **03.07.2024**
(21) Application number: 22885315.6
(22) Date of filing: 12.08.2022
(51) Int. Cl.: G06F 21/62

(54) **APPLICATION DISPLAY METHOD, ELECTRONIC DEVICE, AND STORAGE MEDIUM**

(30) Priority: 26.10.2021 CN 202111246933
(71) Applicant: Huawei Technologies Co., Ltd., Shenzhen, Guangdong 518129 (CN)
(72) Inventor: YANG, Yang, Shenzhen, Guangdong 518129 (CN); ZHANG, Yunyi, Shenzhen, Guangdong 518129 (CN); WEI, Jiayi, Shenzhen, Guangdong 518129 (CN); FAN, Yajun, Shenzhen, Guangdong 518129 (CN); CHEN, Di, Shenzhen, Guangdong 518129 (CN)
(74) Representative: Körber, Martin Hans
(86) International application number: PCT/CN2022/112262
(87) International publication number: WO 2023/071415

(57) **Abstract**

An application display method, an electronic device (100), and a storage medium are provided. The application display method includes: detecting a first operation of a first user (1) on a window of a first application (510), switching, in response to the first operation, the first application (510) from being displayed in the foreground to being run in the background, and setting the first application (510) as a privacy protection application of the first user (1), where the first application (510) is an application (510) to which the window of the first application (510) belongs; detecting a second operation for viewing a privacy protection application, and in response to the second operation, obtaining first identity information used for identity authentication; and matching the first identity information with pre-stored identity information of the first user (1), and if the first identity information matches the pre-stored identity information of the first user (1), displaying an identifier (512) of the privacy protection application of the first user (1), where the identifier (512) of the privacy protection application of the first user (1) includes an identifier (512) of the first application (510).

## Description

This application claims priority to Chinese Patent Application No. 202111246933.5, filed with the China National Intellectual Property Administration on October 26, 2021 and entitled "APPLICATION DISPLAY METHOD, ELECTRONIC DEVICE, AND STORAGE MEDIUM", which is incorporated herein by reference in its entirety.

### TECHNICAL FIELD

This application relates to the field of terminal technologies, and in particular, to an application display method, an electronic device, and a storage medium.

### BACKGROUND

One or more applications may be run on an existing terminal such as a mobile phone. Generally, the mobile phone may display an application window in the foreground, and according to a requirement, the user may switch an application from being displayed in the foreground to being run in the background, or switch an application from being run in the background to being displayed in the foreground.

### SUMMARY

According to a first aspect, this application provides an application display method. The method is applied to an electronic device and includes:
The electronic device detects a first operation of a first user on a window of a first application, switches, in response to the first operation, the first application from being displayed in the foreground to being run in the background, and sets the first application as a privacy protection application of the first user.

It may be understood that the first operation is used to switch the first application from being displayed in the foreground to being run in the background, and set the first application as the privacy protection application of the first user. The first application is an application to which the window of the first application belongs. For example, the first operation may be specifically an operation such as dragging, sliding, or tapping of the first user on the window of the first application, or may be an operation of the first user on a preset control in the window of the first application.

The electronic device detects a second operation for viewing a privacy protection application, and in response to the second operation, obtains first identity information used for identity authentication. It may be understood that the second operation is used to obtain the first identity information, and match the first identity information with pre-stored identity information of the first user. For example, the second operation may be an operation such as sliding or tapping of a user on a display of the electronic device. This is not limited in this application.

The electronic device matches the first identity information used for the identity authentication with the pre-stored identity information of the first user, and if the first identity information used for the identity authentication matches the pre-stored identity information of the first user, displays an identifier of the privacy protection application of the first user. The identifier of the privacy protection application of the first user includes an identifier of the first application.

After the electronic device detects the second operation, the electronic device may actively collect the first identity information from the user, or the user actively enters the first identity information into the electronic device. The identity information of the first user may be specifically biological information such as a fingerprint and a voiceprint of the first user.

It should be noted that the privacy protection application may be referred to as an application in a background private space. In other words, the privacy protection application of the first user may be referred to as the application in the background private space of the first user, and only the first user may access the background private space of the first user based on the identity information of the first user.

Further, the identifier of the privacy protection application may be an application interface screenshot, an icon, or the like of the application, and is used to identify an identity of the privacy protection application.

According to the application display method provided in this embodiment of this application, the user may view the privacy protection application only when the identity authentication of the user succeeds, to achieve an objective of protecting privacy.

In an embodiment of this application, after the electronic device displays the identifier of the privacy protection application of the first user, the method further includes:
The electronic device detects a third operation on the identifier of the first application, switches, in response to the third operation, the first application from the background to the foreground, and displays the window of the first application.

For example, the third operation may be an operation such as dragging the identifier, for example, dragging the identifier from one display region to another display region. Alternatively, the third operation may be an operation such as tapping the identifier, for example, double tapping the identifier.

In an embodiment of this application, after the electronic device displays the identifier of the privacy protection application of the first user, the method further includes:
The electronic device detects a fourth operation on the identifier of the first application.

In response to the fourth operation, the electronic device closes the first application, and sets the first application as a non-privacy protection application. It may be understood that closing the first application means closing the first application by the electronic device, and may be specifically closing a process corresponding to the first application, releasing a resource occupied by the first application, or the like.

Further, the non-privacy protection application is relative to the privacy protection application, and the user may view a running status of the privacy protection application without the identity authentication.

In an embodiment of this application, the second operation triggers a preset display region, and the preset display region may indicate a display region corresponding to the background private space, and is used to display the privacy protection application. For example, the identifier of the privacy protection application of the first user is displayed in the preset display region.

In an embodiment of this application, before the electronic device detects the first operation of the first user on the window of the first application, the method further includes: The electronic device displays the preset display region. The first operation is specifically an operation of dragging the window of the first application to the preset display region.

Further, in an embodiment of this application, after the electronic device displays the identifier of the privacy protection application of the first user, the method further includes:
The electronic device detects a fifth operation for closing the preset display region, and in response to the fifth operation, closes the preset display region. It may be understood that the preset display region is used to display the identifier of the privacy protection application. The fifth operation may be a sliding operation, an operation of tapping a preset control, or the like that is preset on the display of the electronic device. This is not limited in this application.

Further, after the preset display region is closed, it is indicated that the identifier of the privacy protection application is not displayed currently.

In an embodiment of this application, after the electronic device switches the first application from being displayed in the foreground to being run in the background, the method further includes:
The electronic device detects a sixth operation for viewing a recent task list of the electronic device.

In response to the sixth operation, the electronic device displays the recent task list of the electronic device. The recent task list of the electronic device does not include the privacy protection application.

It should be noted that the recent task list may be a list indicating an application currently run in the electronic device. Because the electronic device does not perform identity authentication before detecting the second operation of viewing the privacy protection application by the first user, the electronic device may display only a list of non-privacy protection applications in the task list. In this way, the user cannot view specific content of the privacy protection application run in the background, to achieve the objective of protecting user privacy.

In an embodiment of this application, after the electronic device sets the first application as the privacy protection application of the first user, the method further includes:
The electronic device detects a seventh operation for viewing a recent task list of the electronic device.

In response to the seventh operation, the electronic device displays the recent task list of the electronic device. The recent task list of the electronic device includes the identifier of the privacy protection application, and the identifier of the privacy protection application is displayed in a blurry manner, or the identifier of the privacy protection application is displayed in a preset pattern. It may be understood that the preset pattern is not true content of the privacy protection application, and is merely used to prevent content leakage of the privacy protection application.

In this embodiment, even if the user does not perform identity authentication, the electronic device may display all applications in a current task list, but specific content of a window of the privacy protection application may be blurred, or may be displayed in the preset pattern, and true content in the window of the privacy protection application is not displayed, to achieve the objective of protecting user privacy.

In an embodiment of this application, after the electronic device switches the first application from being displayed in the foreground to being run in the background, the method further includes:
The electronic device detects an eighth operation for viewing a recent task list of the electronic device.

In response to the eighth operation, the electronic device obtains second identity information used for identity authentication, matches the second identity information used for the identity authentication with the pre-stored identity information of the first user, and if the second identity information used for the identity authentication matches the pre-stored identity information of the first user, displays the recent task list of the electronic device. The recent task list includes the identifier of the privacy protection application of the first user. Alternatively, in response to the eighth operation, the electronic device obtains third identity information used for identity authentication, matches the third identity information used for the identity authentication with the pre-stored identity information of the first user, and if the third identity information used for the identity authentication does not match the pre-stored identity information of the first user, displays the recent task list of the electronic device. The recent task list does not include the identifier of the privacy protection application of the first user.

It may be understood that the eighth operation is used to obtain the recent task list. After detecting the eighth operation, the electronic device obtains information that is entered by the user or that is actively collected by the electronic device and that is used for the identity authentication. If the identity information used for the identity authentication matches pre-stored user information, an identifier of a privacy protection application of a matching user is displayed. For example, if the identity information used for the identity authentication matches the pre-stored identity information of the first user, the identifier of the privacy protection application of the first user is displayed. For example, if the identity information used for the identity authentication matches pre-stored identity information of a second user, an identifier of a privacy protection application of the second user is displayed. In other words, if the identity information used for the identity authentication does not match the pre-stored identity information of the first user, the identifier of the privacy protection application of the first user is not displayed.

In this embodiment, when the user views the recent task list, if the identity authentication of the user succeeds, the user may view the non-privacy protection application and a list of privacy protection applications corresponding to the user.

According to a second aspect, this application provides an electronic device, including a processor and a storage device. The storage device stores program instructions. When the program instructions are run by the processor, the electronic device is enabled to perform the display method shown in the first aspect.

According to a third aspect, this application provides a storage medium, including computer instructions. When the computer instructions are run on an electronic device, the electronic device is enabled to perform the display method shown in the first aspect.

### BRIEF DESCRIPTION OF DRAWINGS

FIG. 1A and FIG. 1B are graphical interfaces for switching of an application between the foreground and the background in a conventional technology 1;
FIG. 2 is a graphical interface for switching of an application between the foreground and the background in a conventional technology 2;
FIG. 3 is a schematic diagram of a structure of an electronic device 100 according to an embodiment of this application;
FIG. 4A to FIG. 4D are diagrams of software architectures of an electronic device 100 according to an embodiment of this application;
FIG. 5A to FIG. 5Q are graphical interfaces of an electronic device 100 according to an embodiment of this application;
FIG. 6A to FIG. 6I are graphical interfaces of an electronic device 100 according to an embodiment of this application;
FIG. 7A to FIG. 7E are graphical interfaces of an electronic device 100 according to an embodiment of this application; and
FIG. 8A and FIG. 8B are a flowchart of an application display method according to another embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In the following, the terms "first" and "second" are used merely for descriptive purposes, and cannot be understood as indicating or implying relative importance or implicitly indicating the quantity of indicated technical features. Therefore, a feature limited by "first" or "second" may explicitly or implicitly include one or more features. In descriptions of embodiments of this application, unless otherwise specified, "a plurality of" means two or more than two.

In a conventional technology, an electronic device such as a mobile phone may switch an application from being displayed in the foreground to being run in the background, or switch an application from being run in the background to being displayed in the foreground. A terminal based on an Android system is used as an example. The terminal may obtain, based on a desktop application (Launcher) and a recent screen (recent screen) function in an Android System UI, an application list run on the terminal, namely, a task list, and display an application in the task list. Further, the terminal may switch an application between the foreground and the background based on an operation of a user on each application. System UI and Launcher may be run in a device system in a form of a system application, to implement functions such as a system status bar (Status Bar), a recent task interface (Recents Screen), and a screenshot interface (Screenshot).

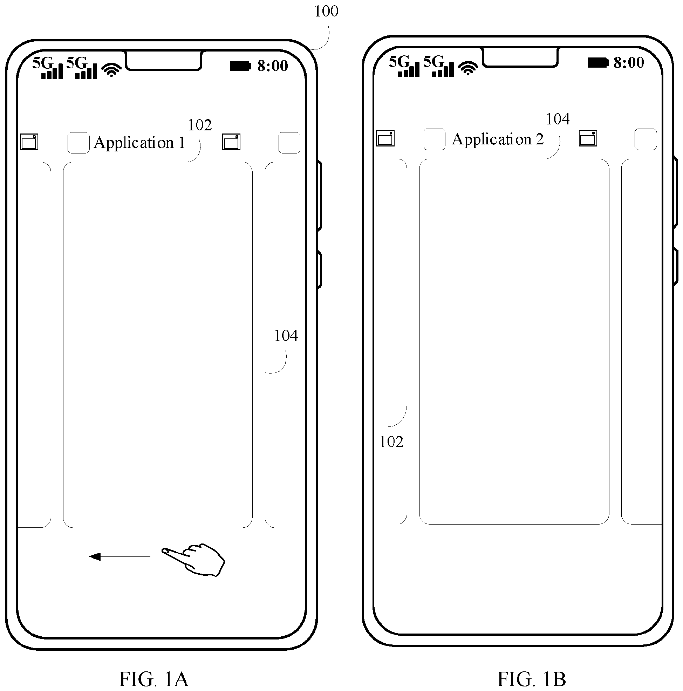

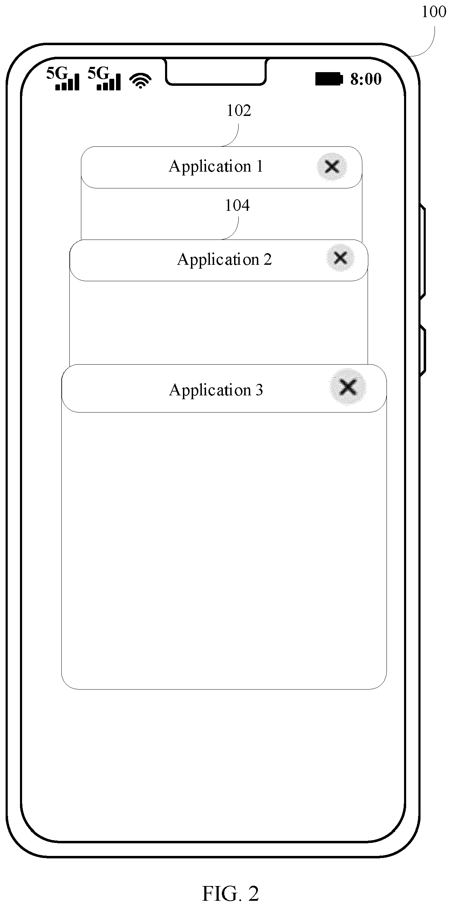

Refer to FIG. 1A, FIG. 1B, and FIG. 2. The following describes switching of an application between the foreground and the background in a conventional technology.

FIG. 1A and FIG. 1B are specifically graphical interfaces for switching of an application between the foreground and the background of an electronic device 100 in a conventional technology 1. Specifically, as shown in FIG. 1A, the electronic device 100 displays application windows that are run by the electronic device 100 and that specifically include a window of an application 1 and a window of an application 2. A user may tap the window 102 of the application 1, to indicate the electronic device 100 to display the application 1 in the foreground, and run the application 2 and another application in the background. Further, the user may slide leftwards on a graphical interface in FIG. 1A to enter an interface shown in FIG. 1B. The user may tap the window 104 of the application 2, to indicate the electronic device 100 to display the application 2 in the foreground, and run the application 1 and another application in the background.

FIG. 2 is a graphical interface for switching of an application between the foreground and the background of an electronic device 100 in a conventional technology 2. Specifically, as shown in FIG. 2, the electronic device 100 displays application windows that are run by the electronic device 100 and that specifically include a window of an application 1, a window of an application 2, and a window of an application 3. A user may tap the window 102 of the application 1, to indicate the electronic device 100 to display the application 1 in the foreground, and run the application 2 and another application in the background. Alternatively, the user may tap the window 104 of the application 2, to indicate the electronic device 100 to display the application 2 in the foreground, and run the application 1 and another application in the background.

In the conventional technology 1 and the conventional technology 2, the electronic device 100 may control, based on a user operation, the application to switch between being displayed in the foreground and being run in the background. The entire switching process is not related to user identity authentication, which causes privacy protection problems. For example, to prevent another person from peeping at an application displayed on the electronic device 100, the user usually switches the application displayed in the foreground to the background. However, if the electronic device 100 is obtained by another person, the application may be switched from the background to the foreground without limitation, which causes privacy leakage.

Based on this, this application provides an application switching method. The method may be applied to an electronic device 100. In solutions disclosed in this application, a user may create one or more background private spaces on the electronic device 100 based on specific identity information. The user may access, by using identity information of the user, the background private space created by the user, and may switch a foreground application to the background private space, or switch an application in the background private space to the foreground for display. An application run in the background in this application may include an application run in the background private space and an application run in a non-background private space. When the application is run in the background private space, another user cannot randomly view content of the application based on a recent screen function of the electronic device, and even cannot determine whether the application is being run. The user can only view a background application in the non-background private space. In this way, privacy leakage may be avoided. Further, according to an application display method provided in this application, the user may further switch the application between the foreground and the background of the electronic device 100 more conveniently.

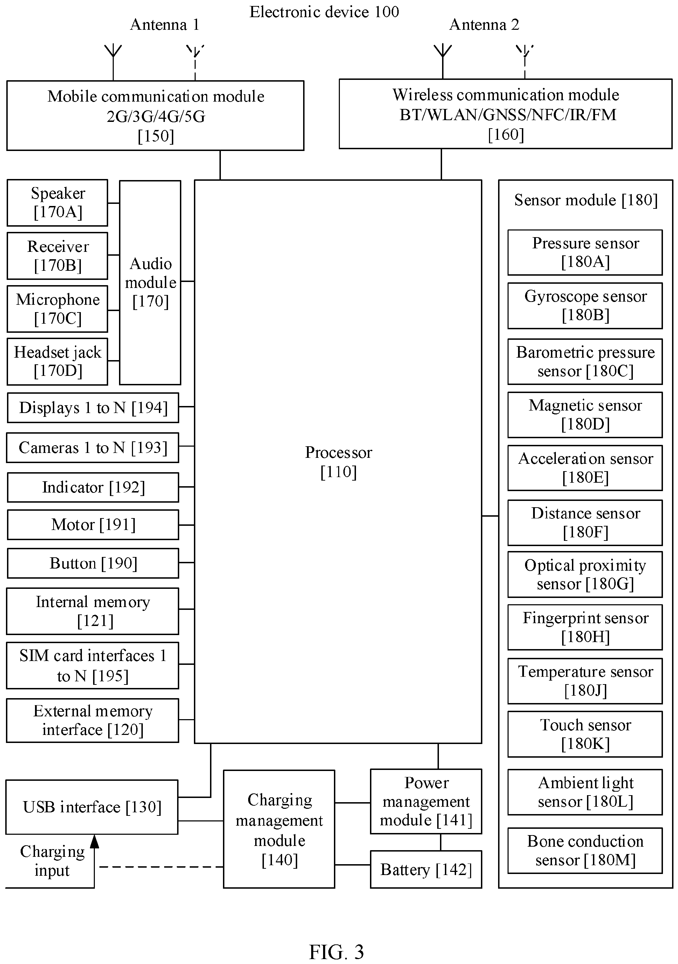

FIG. 3 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, and an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control on instruction reading and execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 and the touch sensor 180K communicate with each other through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect to the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect to the processor 110 and a peripheral device such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface to implement a photographing function of the electronic device 100. The processor 110 communicates with the display 194 through the DSI interface to implement a display function of the electronic device 100.

The GPIO interface may be configured by software. The GPIO interface may be configured as a control signal or as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to perform data transmission between the electronic device 100 and a peripheral device, or may be configured to connect to a headset to play audio through the headset. The interface may be further configured to connect to another electronic device such as an AR device.

It may be understood that an interface connection relationship between the modules shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some wired charging embodiments, the charging management module 140 may receive a charging input from the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as battery capacity, a battery cycle quantity, and a state of health (leakage and impedance) of the battery. In some other embodiments, the power management module 141 may also be disposed in the processor 110. In some other embodiments, the power management module 141 and the charging management module 140 may also be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local region network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, the at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based enhancement system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194. N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through the lens, and is projected onto a photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a format such as standard RGB or YUV. In some embodiments, the electronic device 100 may include one or N cameras 193. N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU may implement applications such as intelligent cognition of the electronic device 100, for example, image recognition, facial recognition, speech recognition, and text understanding.

The external memory interface 120 may be configured to connect to an external storage card, for example, a micro SD card, to extend a storage capability of the electronic device 100. An external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage region and a data storage region. The program storage region may store an operating system, an application required by at least one function (for example, a sound playing function or an image playing function), and the like. The data storage region may store data (such as audio data and an address book) and the like that are created during use of the electronic device 100. In addition, the internal memory 121 may include a high-speed random access memory, and may further include a non-volatile memory, for example, at least one magnetic disk storage device, a flash memory device, and a universal flash storage (universal flash storage, UFS). The processor 110 performs various function applications and data processing of the electronic device 100 by running the instructions stored in the internal memory 121 and/or instructions stored in a memory provided in the processor.

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound by moving a human mouth close to the microphone 170C, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile electronic device platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines pressure intensity based on the change of the capacitance. When a touch operation is performed on the display 194, the electronic device 100 detects intensity of the touch operation based on the pressure sensor 180A. The electronic device 100 may also calculate a touch location based on a detection signal of the pressure sensor 180A. In some embodiments, touch operations performed on a same touch position but with different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the electronic device 100. In some embodiments, angular velocities of electronic device 100 around three axes (which are x, y, and z axes) may be determined by using the gyroscope sensor 180B. The gyroscope sensor 180B may be used for image stabilization. For example, when a shutter is pressed, the gyroscope sensor 180B detects an angle at which the electronic device 100 jitters; calculates, based on the angle, a distance for which a lens module needs to compensate; and enables the lens to cancel the jitter of the electronic device 100 through reverse motion, to implement image stabilization. The gyroscope sensor 180B may be further used for a navigation scenario and a motion-sensing game scenario.

The barometric pressure sensor 180C is configured to measure barometric pressure. In some embodiments, the electronic device 100 calculates an altitude by using a value of the atmospheric pressure measured by the barometric pressure sensor 180C, to assist in positioning and navigation.

The magnetic sensor 180D includes a Hall sensor. The electronic device 100 may detect opening and closing of a leather case of a flip cover by using the magnetic sensor 180D. In some embodiments, when the electronic device 100 is a flip phone, the electronic device 100 may detect opening and closing of the flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may use the distance sensor 180F to measure a distance to achieve fast focusing.

The optical proximity sensor 180G may include, for example, a light-emitting diode (LED) and an optical detector such as a photodiode. The light-emitting diode may be an infrared light-emitting diode. The electronic device 100 emits infrared light to the outside by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may use the optical proximity sensor 180G to detect that a user holds the electronic device 100 close to an ear for a call, so as to automatically turn off the display to save power. The optical proximity sensor 180G may also be used in a holster mode or pocket mode for automatic unlocking and screen locking.

The ambient light sensor 180L is configured to sense ambient light luminance. The electronic device 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket, to prevent accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142, to avoid a case in which the electronic device 100 is shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch device". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device 100 in a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may be in contact with a human pulse, to receive a blood pressure beating signal. In some embodiments, the bone conduction sensor 180M may alternatively be disposed in a headset to be combined into a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration alert. The motor 191 may be configured to provide an incoming call vibration alert and a touch vibration feedback. For example, touch operations on different applications (such as photographing and audio playing) may correspond to different vibration feedback effects. For touch operations on different regions of the display 194, the motor 191 may also correspondingly generate different vibration feedback effects. Different application scenarios (such as a time reminder, information receiving, an alarm clock, and a game) may also correspond to different vibration feedback effects. The touch vibration feedback effect may be further customized.

The indicator 192 may be an indicator, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces. N is a positive integer greater than 1. The SIM card interface 195 may support a nano-SIM card, a micro-SIM card, a SIM card, and the like. A plurality of cards may be inserted into a same SIM card interface 195 at the same time. Types of the plurality of cards may be the same as or different. The SIM card interface 195 may also be compatible with different types of SIM cards. The SIM card interface 195 may also be compatible with an external memory card. The electronic device 100 interacts with a network through the SIM card to implement functions such as calls and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of the layered architecture is used as an example for describing a software structure of the electronic device 100.

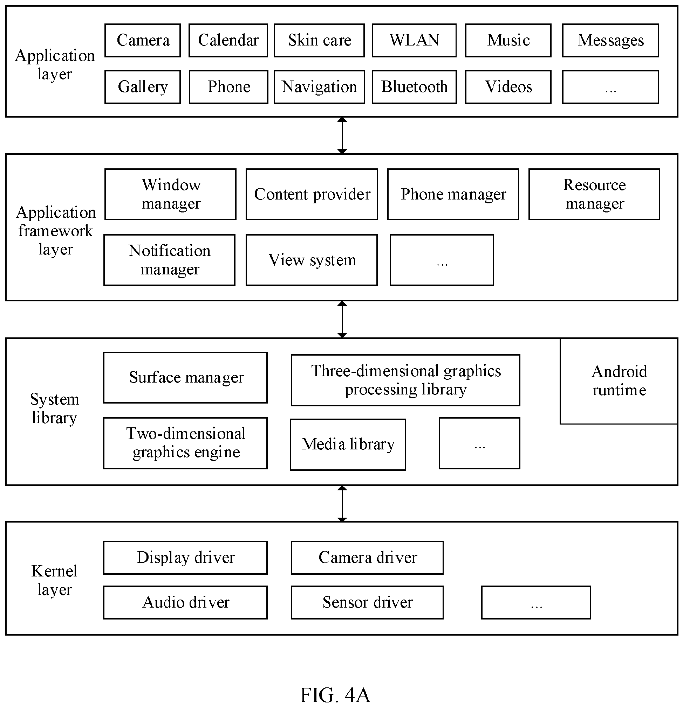

FIG. 4A is a block diagram of a software structure of an electronic device 100 according to an embodiment of this application.

In a layered architecture, software is divided into several layers, and each layer has a clear role and task. The layers communicate with each other through a software interface. In some embodiments, an Android system is divided into four layers from top to bottom: an application layer, an application framework layer, Android runtime (Android runtime) and a system library, and a kernel layer.

The application layer may include a series of application packages.

As shown in FIG. 4A, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4A, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in the status bar, which can be used to convey a notification-type message, and can automatically disappear after a short stay without user interaction. For example, the notification manager is configured to notify download completion, provide a message notification, and the like. The notification manager may alternatively be a notification that appears in a top status bar of the system in a form of a graph or a scroll bar text, for example, a notification of an application run in the background, or a notification that appears on a screen in a form of a dialog window. For example, text information is displayed in the status bar, a prompt tone is made, the electronic device vibrates, or an indicator light flashes.

The Android runtime includes a kernel library and a virtual machine. The Android runtime is responsible for scheduling and management of the Android system.

The kernel library includes two parts: one part is a function that needs to be invoked by a Java language, and the other part is a kernel library of Android.

The application layer and the application framework layer are run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media libraries may support a variety of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

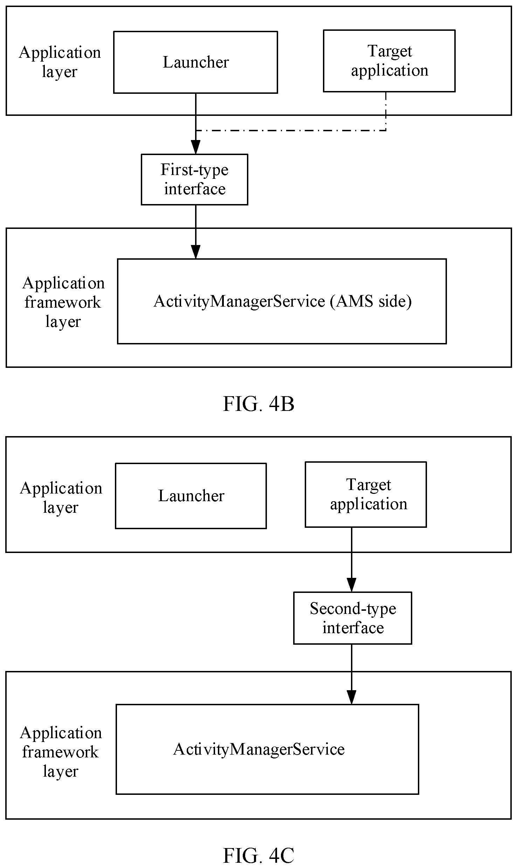

FIG. 4B is a block diagram of a software structure of the electronic device 100 according to an embodiment of this application. A software framework in FIG. 4B may be based on the software framework shown in FIG. 4A.

The application layer includes Launcher, a target application, and the like. The target application may be configured to implement a background private space function in this embodiment of this application.

Still refer to FIG. 4B. The application framework layer may include ActivityManagerService (ActivityManagerService, AMS). A user interface of an application in the Android system exists in a form of Activity (Activity). One Activity object corresponds to one window page. The AMS is responsible for managing all Activity objects of the system, including an entire life cycle of starting, pausing, stopping, ending, and the like, and is further responsible for starting, stopping, and OOM parameter setting of an application process.

In an embodiment of this application, Launcher at the application layer may obtain a recent task list mRawTasks from the AMS side by invoking a first-type interface provided by systemUI, and display, on a desktop, an application window corresponding to each task list mRawTasks. It should be noted that the first-type interface is an Android native interface. For example, the first-type interface includes a plurality of interfaces, such as a getRecentTasks (ActivityManagerWrapper.java-systemUI) interface and an ActivityTaskManager.getService().getRecentTask(numTasks,RECENT_IGNORE_UNAVALABLE, userID).getlist() interface. In an example, Launcher may obtain the recent task list mRawTasks from the AMS side by invoking the plurality of interfaces in the first-type interface layer by layer.

In an embodiment of this application, the AMS side includes a specific type corresponding to each task, for example, a taskRecord type. A developer may add a field belongSecretSpace to the taskRecord type on the AMS side. A specific value of belongSecretSpace indicates whether a task is in a background private space and a background private space to which the task belongs. For example, Table 1 is specifically an example of a correspondence between a value of belongSecretSpace and a background private space provided in an embodiment of this application. A task that is of the taskRecord type and whose value of belongSecretSpace is secretSpace1 corresponds to a background private space 1. In other words, each application that is in the electronic device 100 and whose value of belongSecretSpace is secretSpace1 is an application run in the background private space 1. Further, the background private space 1 is created by a user 1. Only the user 1 may access or operate the background private space 1 based on identity information of the user 1. The operation includes switching an application in the background private space to the foreground for display, switching an application displayed in the foreground to the background private space, viewing a currently run application in the background private space, or the like. In this embodiment of this application, an example in which the user 1 creates the private space 1 is used to describe the solution disclosed in this application.

**Table 1**

| User | Identity information | Background private space | belongSecretSpace in taskRecord |
|---|---|---|---|
| User 1 | Identity information of the user 1 | Background private space 1 | secretSpace1 |
| User 2 | Identity information of the user 1 | Background private space 2 | secretSpace2 |

Further, when the user 1 accesses the background private space 1, the target application may obtain the recent task list mRawTasks by invoking the foregoing first-type interface (for example, getRecentTasks of ActivityManagerWrapper), and then the target application selects a task that is in the recent task list mRawTasks and whose belongSecretSpace is secretSpace1, and displays, in the foreground, a window, an identifier, or the like of the task (application) whose belongSecretSpace is secretSpace1. In another embodiment of this application, a filtering condition may be added to the first-type interface (for example, getRecentTasks of ActivityManagerWrapper), and selection is performed on belongSecretSpace through the first-type interface, to select a task (application) whose belongSecretSpace is secretSpace1. The target application may display a window or an identifier of the selected application.

In an embodiment of this application, when the user switches the application in the background private space 1 to the foreground for display, or switches the application displayed in the foreground to the background private space 1, a value of belongSecretSpace in the taskRecord type of the application (task) changes correspondingly. For example, the user 1 may switch an application 1 in the background private space 1 to the foreground. The AMS may set, based on the user operation, a value of belongSecretSpace in the taskRecord type of the application 1 from secretSpace1 to a preset value, for example, NULL. The preset value indicates that the application 1 is an application in a non-private space. If the user 1 switches the application 1 from the foreground to the background private space 1 again, the AMS may set the value of belongSecretSpace in the taskRecord type of the application 1 from the preset value NULL to secretSpace1. Alternatively, if the user 2 switches the application 1 from the foreground to a background private space 2, the AMS may set the value of belongSecretSpace in the taskRecord type of the application 1 from the preset value NULL to secretSpace2.

In an example, when the electronic device displays the recent task list based on Recents Screen, only a value of belongSecretSpace that is NULL may be displayed.

In the embodiment shown in FIG. 4B, the target application obtains the recent task list mRawTasks by invoking the first-type interface, and selects, through the target application, the task whose belongSecretSpace is secretSpace1, or directly sets the filtering condition in the first-type interface to perform selection, to determine a task in a task background private space.

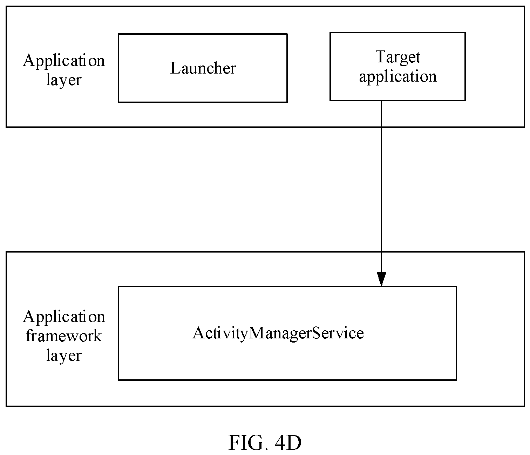

It should be noted that whether a task in the task list belongs to the background private space may be further determined by using another method. In another example of this application, refer to FIG. 4C. The target application may invoke a second-type interface to obtain the recent task list mRawTasks from the AMS side, and then the target application performs selection on tasks in the recent list. For example, the second-type interface may not be an Android native interface, but an interface newly created by a developer. A function of the second-type interface is the same as that of the first-type interface, and both the first-type interface and the second-type interface are configured to obtain the recent task list. Alternatively, in another example of this application, refer to FIG. 4D. The AMS may also perform selection on tasks in the recent task list, and the target application may directly obtain the selected task in the background private space from the AMS side, and then display the task in the background private space. Alternatively, the target application may directly mark the application run in the background private space in the electronic device 100. After obtaining the task list (application list) from the AMS side, the target application selects the application in the background private space based on a mark on the application, and then displays the task in the background private space. It should be noted that the foregoing method for displaying the application in the background private space is merely an example, and the application list in the background private space may be obtained and displayed in another manner. This is not limited in this application.

In an embodiment of this application, to prevent the application run in the background private space from occupying memory for a long time, the application in the background private space may be periodically cleared. When excessive memory of a mobile phone is occupied, the electronic device 100 may reclaim memory through a garbage collection (GC) function. In an embodiment of this application, a priority of memory reclamation may be properly set. In this solution, memory reclamation complies with the following priority:
1. Preferentially reclaim memory occupied by a background task of the recent screen.
2. Reclaim memory occupied by a task in a background task private space of a current user.
3. Reclaim memory occupied by a task that occupies large memory in a background task private space of another user.
4. Reclaim memory occupied by a task stored earlier in a background task private space of another user.

For details about operations and more explanations of the background private space, refer to the following description.

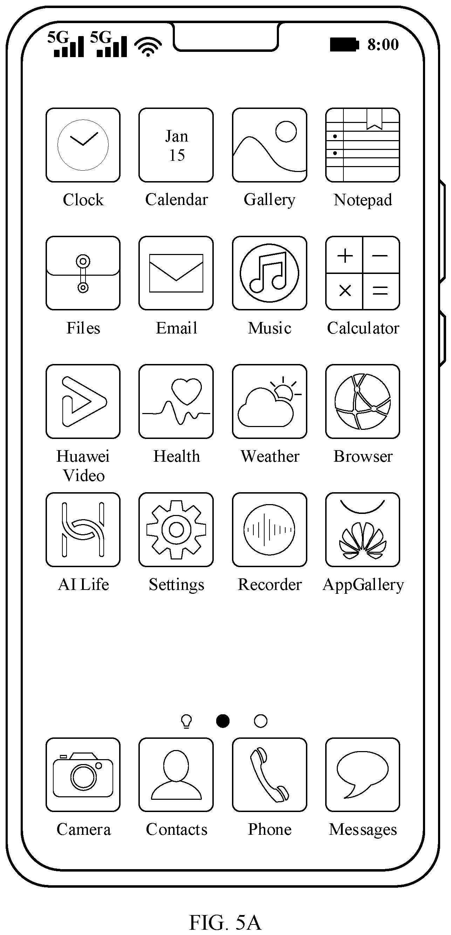

The following further explains and describes the application display method in embodiments of this application with reference to FIG. 5A to FIG. 5Q. FIG. 5A to FIG. 5Q are graphical interfaces of an electronic device 100 according to an embodiment of this application.

FIG. 5A shows a plurality of applications that may be run by the electronic device 100, for example, "Browser", "Huawei Video", and "Calculator". The electronic device 100 may simultaneously run a plurality of applications. For example, the electronic device may simultaneously run "Huawei Video" and "Calculator". A user may run "Huawei Video" in the foreground, and run "Calculator" in the background.

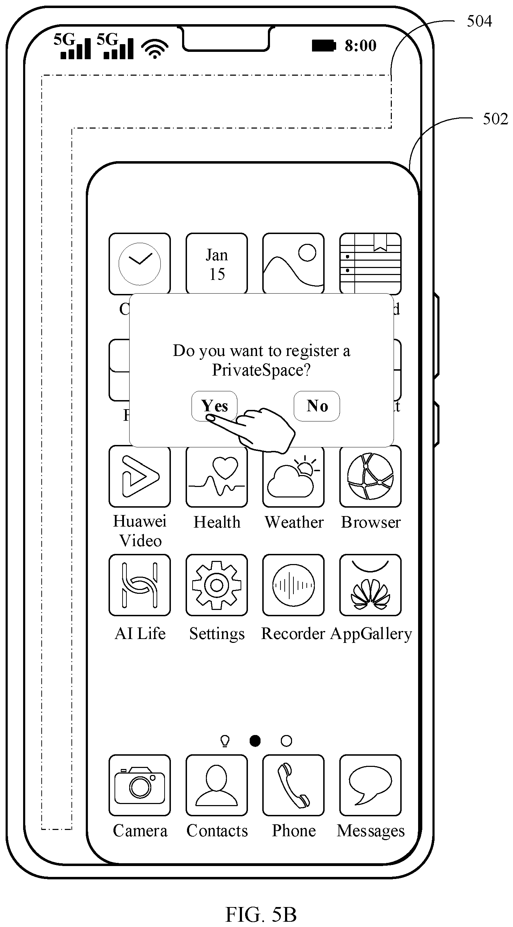

FIG. 5B is a graphical interface when the electronic device 100 enters a one-hand mode. In a conventional technology, the one-hand mode means that the user may reduce an area of a region that is in a display of the electronic device and that is used to display application content, and the user may operate an application interface in the area with one hand. It should be noted that the electronic device may enter the one-hand mode based on a plurality of operations of the user. This is not limited in this application.

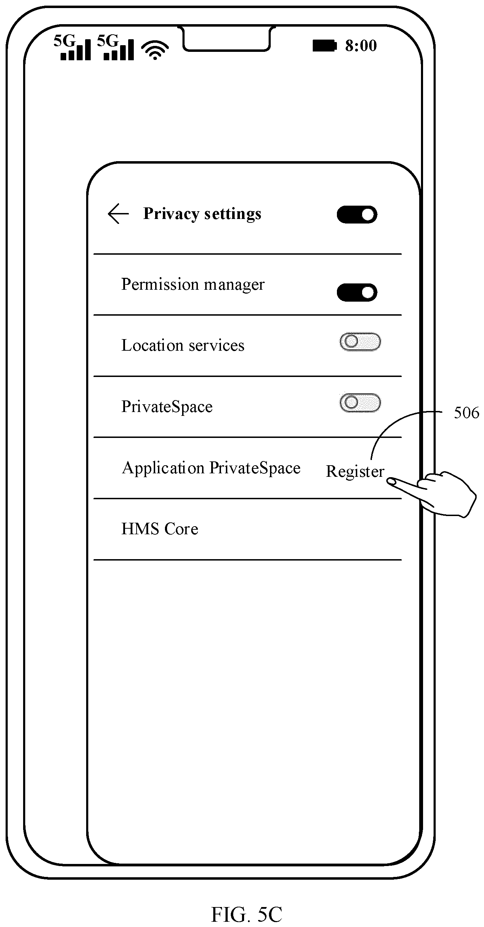

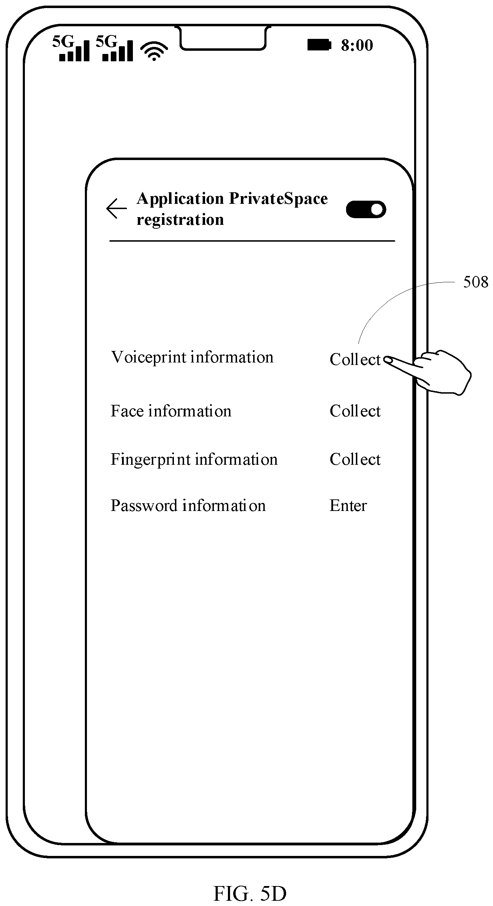

Still refer to FIG. 5B. When the electronic device 100 enters the one-hand mode, the display of the electronic device 100 may include a first display region 502 and a preset display region 504 (a region surrounded by a dashed line in FIG. 5B). The preset display region 504 may be used as a display region of an application in a background private space in this application, and is specifically used to display an identifier of the application in the background private space. In an example, when the electronic device 100 enters the one-hand mode for the first time, the electronic device 100 may remind a user 1 whether to register the background private space. The user 1 may tap a control "Yes" to jump to a graphical interface shown in FIG. 5C, to create the background private space. FIG. 5C shows a registration page of the private space. The user 1 may tap a control 506 "Register" to jump to a graphical interface shown in FIG. 5D, to create a background private space 1.

Refer to FIG. 5D. The user 1 may enter identity information to the electronic device 100 on the registration page. The identity information is used to access the background private space 1 created by the user 1. For example, identity information of the user may include one or more of voiceprint information, face information, fingerprint information, lip information, iris information, password information, and the like. It should be noted that the foregoing registration process is merely an example, and there may be more manners of registering the background private space. This is not limited in this application.

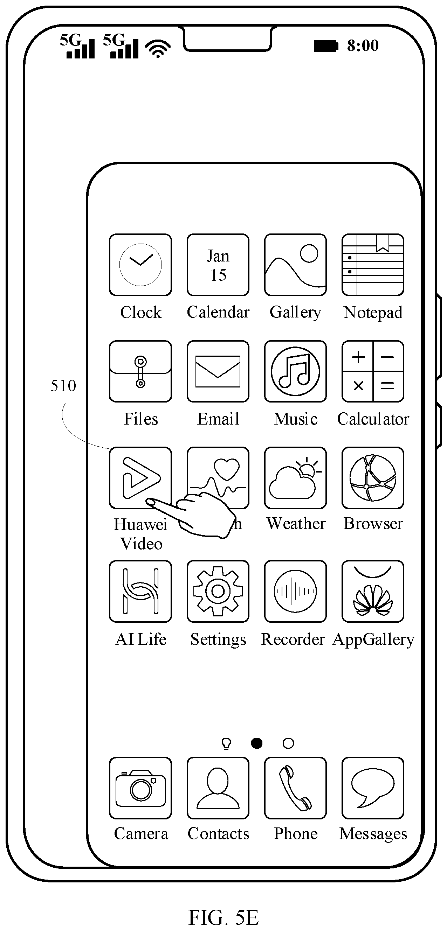

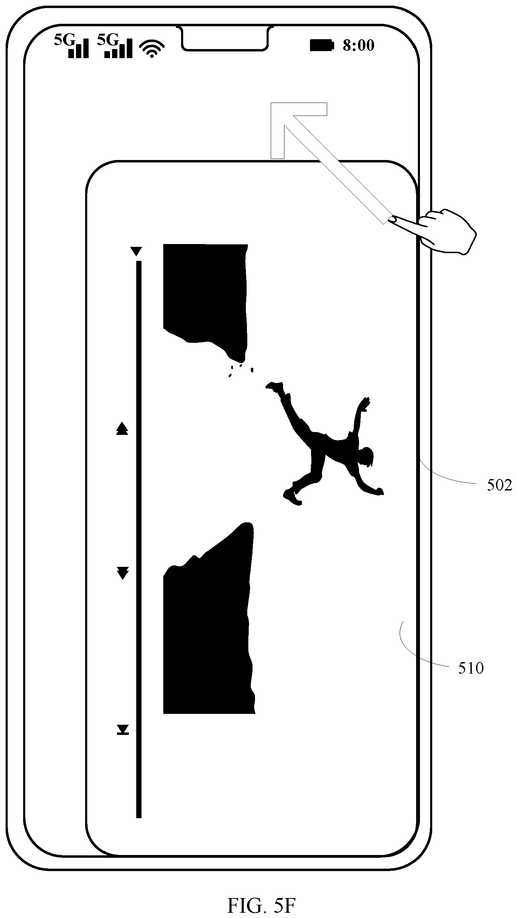

Further, after registering the background private space 1, the user 1 enters a graphical interface that is of the electronic device 100 and that is shown in FIG. 5E (or FIG. 5B). Refer to FIG. 5E. The user 1 may tap an icon of an application 510. In response to the tap operation of the user 1, the electronic device 100 starts the application 510, and enters a graphical interface shown in FIG. 5F. In FIG. 5F, the first display region 502 is a display region of a display interface of the application 510. It may be determined that the current application 510 is displayed in the foreground of the electronic device.

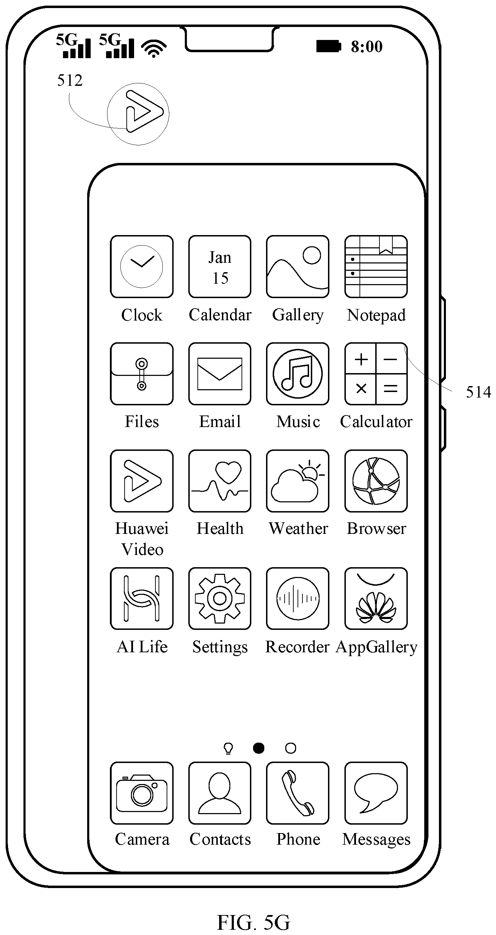

Still refer to FIG. 5F. The user 1 may drag a window of the application 510 from the first display region 502 to the preset display region 504. Refer to FIG. 5G. In response to the dragging action of the user, the electronic device 100 may enable the application 510 to be switched from being displayed in the foreground to being run in the background private space, and display an identifier 512 of the application 510 in the preset display region 504. For example, the identifier 512 may be the icon of the application 510, or the identifier 512 may be a snapshot snapshot of an application interface of the application 510, or the like.

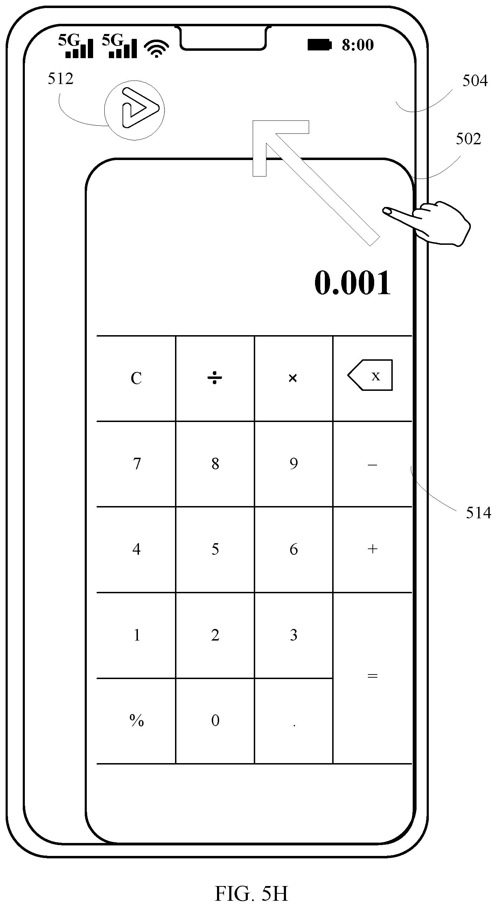

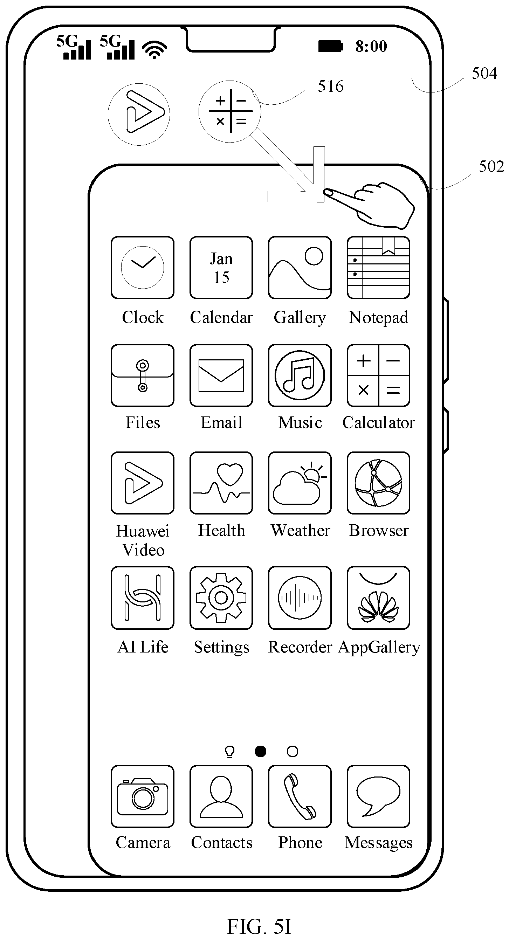

Further, the user 1 may start an application 514 on a graphical interface shown in FIG. 5G. Refer to FIG. 5H. The electronic device 100 may display a graphical interface of the application 514 in the first display region 502. The user 1 may drag a window of the application 514 from the first display region 502 to the preset display region 504. Refer to FIG. 5I. In response to the operation of dragging the application 514 by the user 1, the electronic device 100 may enable the application 514 to enter the background private space 1 for running, and display an identifier 516 of the application 514 in the preset display region 504. For example, the identifier 516 may be an icon of the application 514 or a snapshot of the application 514, or certainly may be another marker indicating an identity of the application 514. This is not limited in this application.

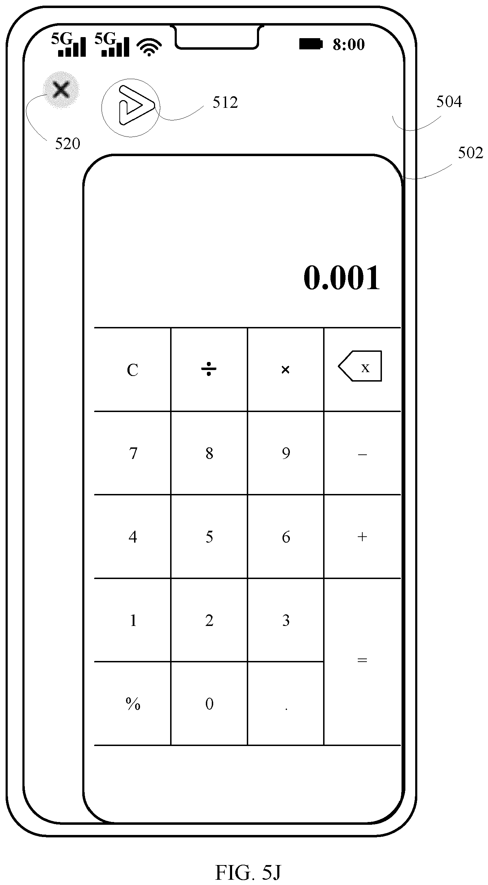

Still refer to FIG. 5I and FIG. 5J. The user 1 may drag the identifier 516 of the application 514 from the preset display region 504 to the first display region 502. Refer to FIG. 5J. In response to the dragging operation of the user on the identifier 516, the electronic device 100 displays the window of the application 514 in the first display region 502, that is, displays interface content of the application 514 in the foreground. It should be noted that the user may further double tap an identifier of the application 514 in the preset display region 504, so that the electronic device 100 displays the window of the application 514 in the first display region. Certainly, there are more manners to switch the application 514 from the preset display region to the first display region for display. This is not limited in this application.

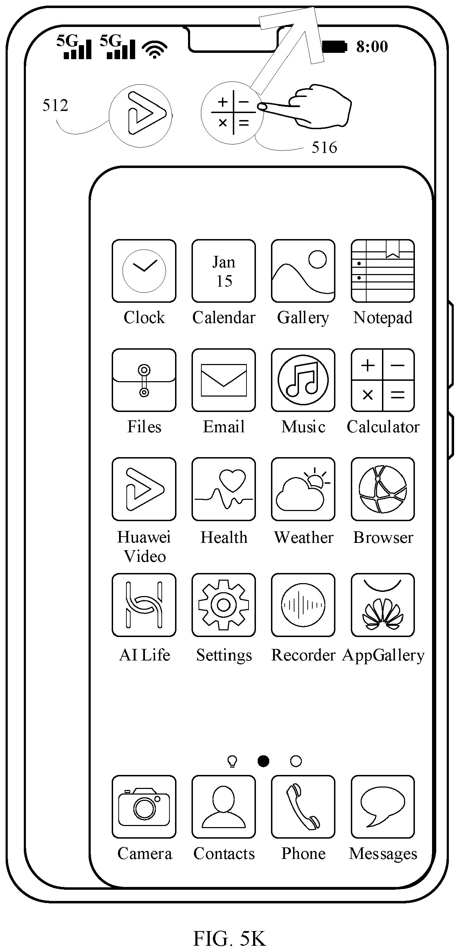

Refer to FIG. 5K (or FIG. 5I). The user 1 may further drag the identifier 516 of the application 514 from the preset display region 504 to a boundary region of the display of the electronic device 100. The boundary region indicates a frame region of the display of the electronic device 100. The electronic device 100 may close the application 514 in response to the operation of dragging an identifier 51 to the boundary region 518 by the user. The boundary region may be referred to as a first region of the display of the electronic device. After closing the application 514, the electronic device re-enters the graphical interface shown in FIG. 5G.

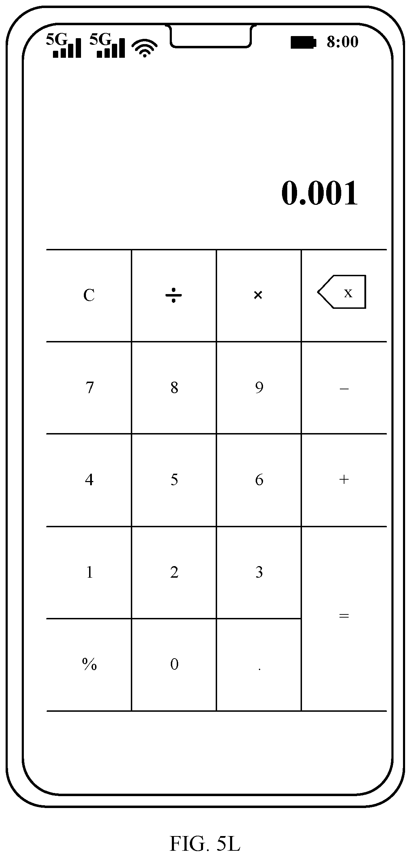

Further, the user 1 may exit the background private space at any time, and the exiting the background private space indicates to hide the background private space on the display interface. For example, still refer to FIG. 5J. A control, for example, a control 520 in the figure, may be specially set in the preset display region for exiting the background private space. The user 1 may tap the control 520 to exit the background private space 1 and enter a graphical interface shown in FIG. 5L. It should be noted that, after the user 1 exits the background private space 1, the application 510 is still run in the background private space 1 of the electronic device 100. Alternatively, in another example, the user may further tap (for example, double tap) a region other than the identifier in the preset display region, to exit the background private space. It may be understood that the foregoing manner of exiting the background private space is merely an example, and more manners may be set to exit the background private space. This is not limited in this application.

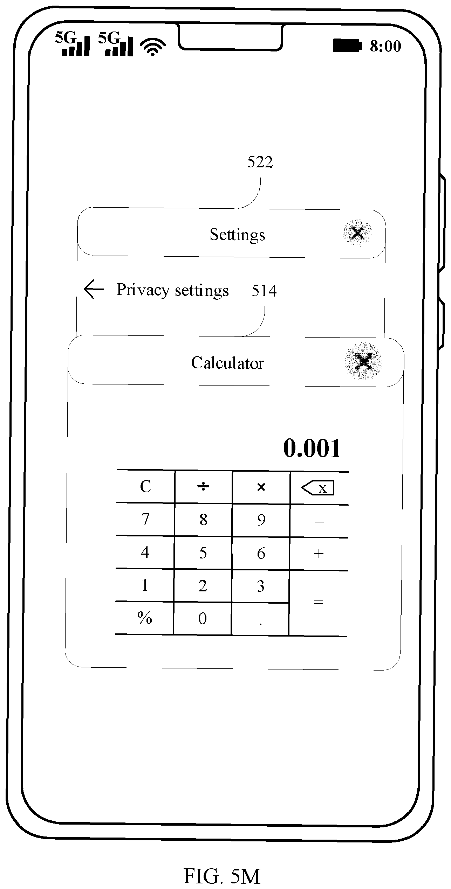

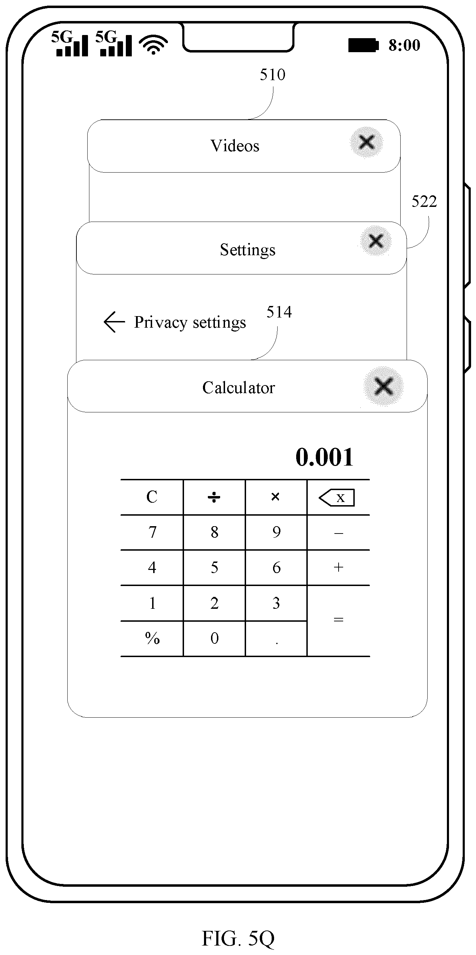

In an embodiment, in FIG. 5L, after the user 1 exits the private space 1, in response to an operation of viewing a task list by the user, the electronic device 100 may obtain the task list through a recent task (recent screen) function, and display a window of an application in the task list. In this embodiment, the electronic device 100 may not display an application that is in the task list and that is run in the background private space 1. For example, it is assumed that the electronic device 100 runs three applications: the application 510, the application 514, and an application 522. The application 514 is run in the foreground, the application 522 is run in a non-background private space, and the application 510 is run in the background private space. Refer to FIG. 5M. When the electronic device views, through the recent screen function, a task run by the electronic device 100, the graphical interface of the electronic device 100 may display only a window of the application 522 and the window of the application 514. In other words, an application in the background private space 1 may not be displayed in Recents Screen, and a user other than the user 1 cannot switch the application in the background private space 1 to the foreground, to protect privacy. Further, in an example, based on a page shown in FIG. 5M, the user 1 may enter the identity information into the electronic device 100. On a premise that the identity information of the user 1 matches identity information corresponding to the background private space 1, the electronic device 100 may enter a graphical interface shown in FIG. 5Q, that is, display the window of the application 510 while displaying the window of the application 522 and the window of the application 514.

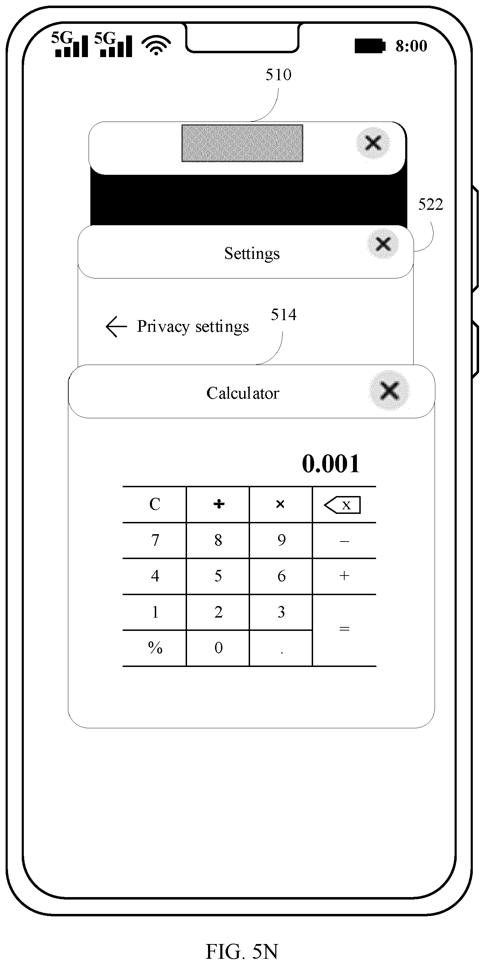

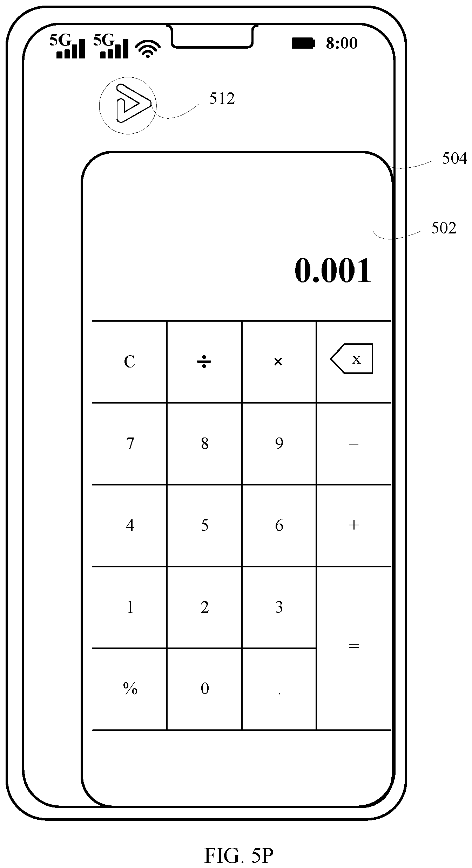

In another embodiment of this application, in FIG. 5L, after the user 1 exits the private space, based on a user operation, the electronic device 100 may view, through the recent task (recent screen) function, a total quantity of applications run in the electronic device, but cannot determine a specific application run in the background private space, and cannot view interface content of the application, or switch the application to the foreground. For example, refer to FIG. 5N. The user can see, through the recent screen function, only three applications run on the electronic device 100: the application 514, the application 522, and the application 510, but cannot learn of an application name and the interface content of the application 510 in the background private space 1. The application 510 is displayed in a blurry manner, or is displayed in a preset pattern. In this example, it may be considered that the identifier of the application 510 is displayed in a blurry manner, or is displayed in the preset pattern. Further, based on a page shown in FIG. 5P, the user 1 may enter the identity information into the electronic device 100. On a premise that the identity information of the user 1 matches identity information corresponding to the background private space 1, the electronic device 100 may enter a graphical interface shown in FIG. 5Q, that is, display window content of the application 510.

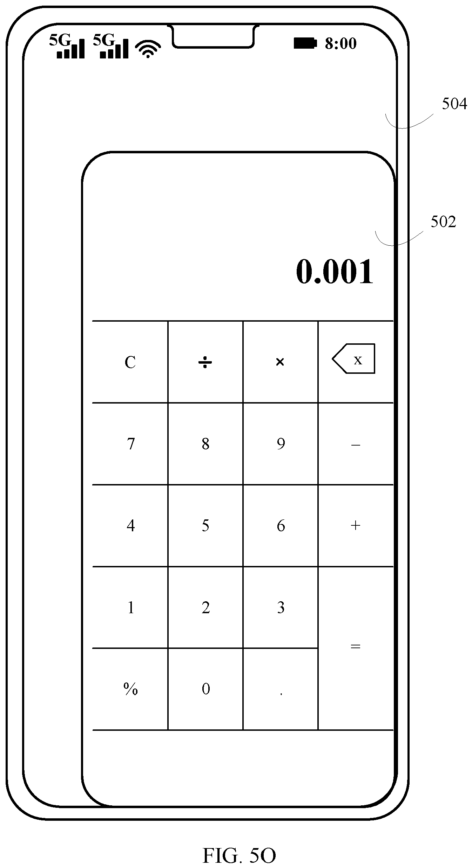

Further, still refer to FIG. 5L. The electronic device enters, on the graphical interface in FIG. 5L based on a user operation, a graphical interface shown in FIG. 5O, that is, enters the one-hand mode. In FIG. 5O, the electronic device 100 may authenticate a user identity. For example, the electronic device 100 may actively collect the identity information of the user, or receive identity information entered by the user to the electronic device.

Further, after collecting the identity information entered by the user, the electronic device 100 may match the identity information entered by the user with identity information entered by the user 1 when the user 1 registers the private space 1, and if the identity information entered by the user matches the identity information entered by the user 1 when the user 1 registers the private space 1, the electronic device 100 displays application information of the background private space 1 corresponding to the user 1. For example, refer to FIG. 5P. After authentication of the identity information of the user 1 succeeds, the electronic device 100 displays an identifier 514 of the background application 510 in the background private space 1 of the user 1. The user 1 may continue to operate the application in the private space, for example, drag the identifier of the application 510 in the background private space 1 to the first display region, so that the application 510 enters the foreground for display, and the like.

In embodiments described in FIG. 5A to FIG. 5Q, the user may choose to run an application in the background private space as required. Only a user corresponding to the private space may access the private space, and operate the application in the private space, to better protect privacy. In addition, in this embodiment, the user switches the application between the foreground and the background more conveniently.

It should be noted that, in the foregoing examples, it is merely an example that when the electronic device enters the one-hand mode, the foreground application is dragged to the preset display region 504 to enter the background private space, or the foreground application is dragged from the preset display region to the first display region 502 to enter the foreground for display. The background private space may further be set or displayed in more forms.

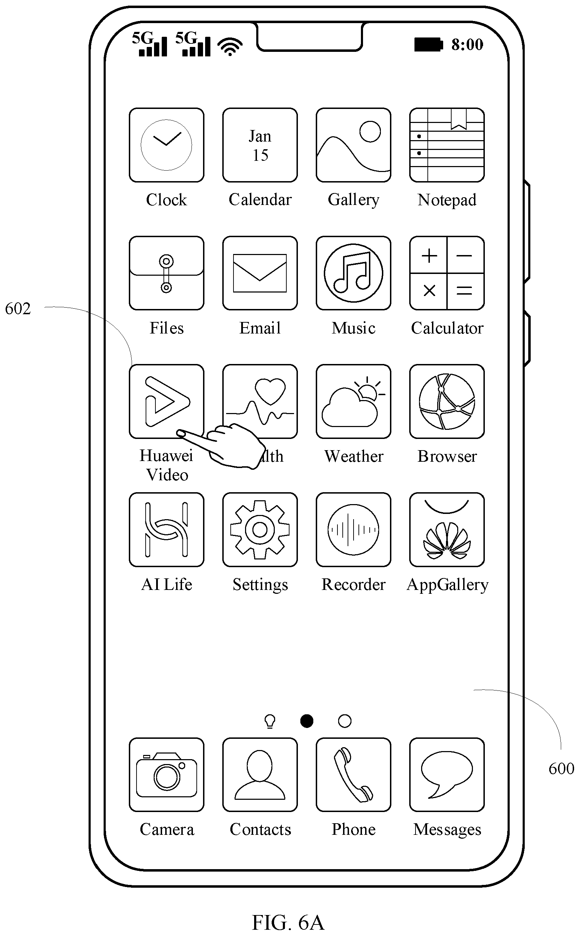

FIG. 6A to FIG. 6I are specifically graphical interfaces of an electronic device 100 according to an embodiment of this application.

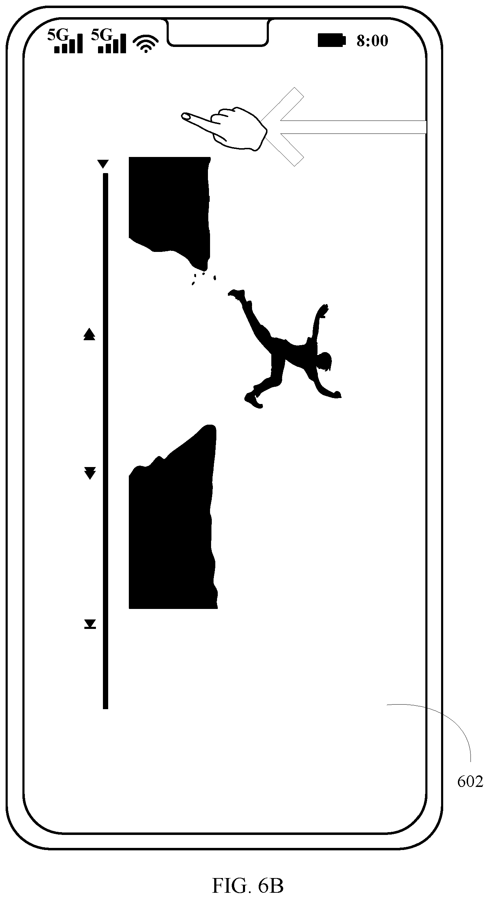

FIG. 6A shows a plurality of applications that may be run by the electronic device 100, for example, "Browser", "Huawei Video", and "Calculator". The electronic device 100 may simultaneously run a plurality of applications. In an entire display region 600 of a display of the electronic device 100, a user may tap an icon of a video application 602. Refer to FIG. 6B. In response to the tap operation of the user, the electronic device 100 runs the video application 602, and displays content of the video application 602 in the entire display region 600. In an example, the entire display region 600 may also be referred to as a first display region.

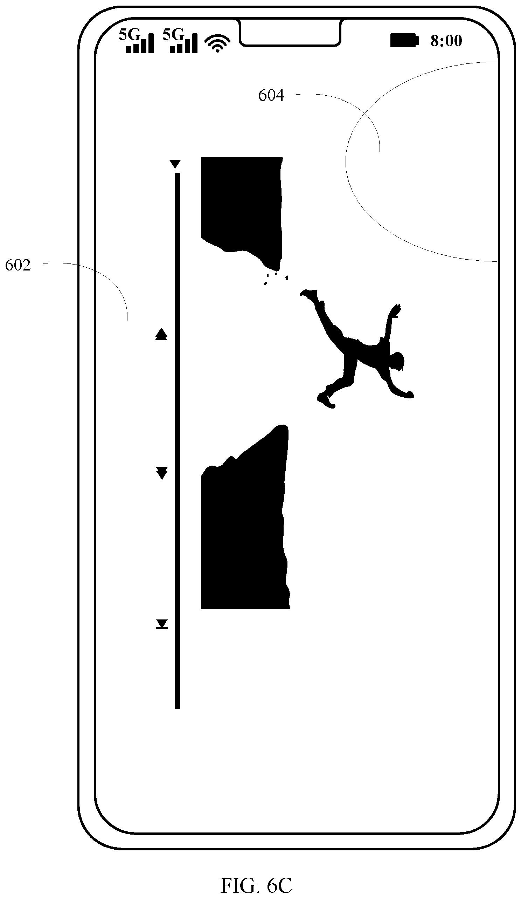

Still refer to FIG. 6B and FIG. 6C. The user may slide leftwards at a preset position of the electronic device 100 to display content in a region corresponding to a preset display region 604. The preset display region 604 is used to display an identifier of an application in a background private space. In an embodiment of this application, the background private space includes a background private space 1 registered by a user 1. The electronic device 100 may collect identity information of the user 1, and authenticate the collected identity information based on identity information that is used when the user 1 registers the private space 1. If the authentication succeeds, the electronic device 100 may display application content in the background private space 1.

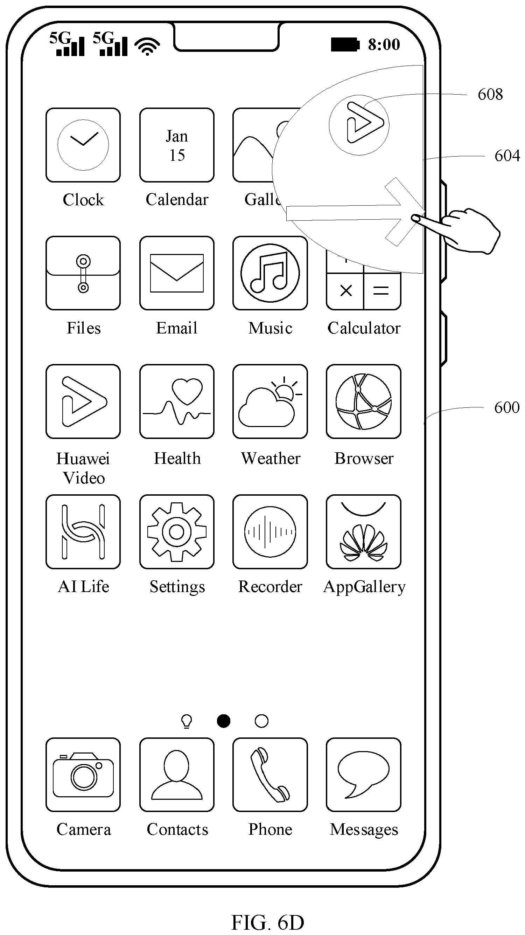

Refer to FIG. 6D. In an example, after the authentication of the user 1 succeeds, the user 1 may drag a window of the video application 602 in the display region 600 from the first display region 600 to the preset display region 604. In response to the dragging action of the user, the electronic device 100 may enable the video application 602 to enter the background private space for running, and display an identifier 608 of the video application 602 in the preset display region 604. The identifier 608 may include the application icon of the video application 602.

Still refer to FIG. 6D. The user may hide the content in the region corresponding to the preset display region 604 in the display region 600, in other words, hide the background private space. For example, the user may slide rightwards in the preset display region 604, to hide the content in the region corresponding to the preset display region 604. Alternatively, a control configured to hide the content in the region corresponding to the preset display region 604 may be set in the preset display region. When the user taps the control, the electronic device 100 hides the content in the region corresponding to the preset display region. Certainly, there may be more manners. This is not limited in this application.

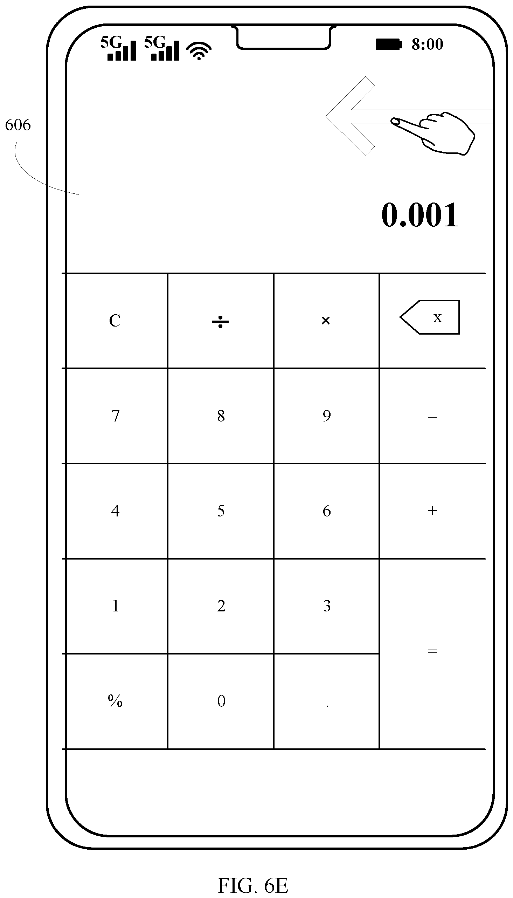

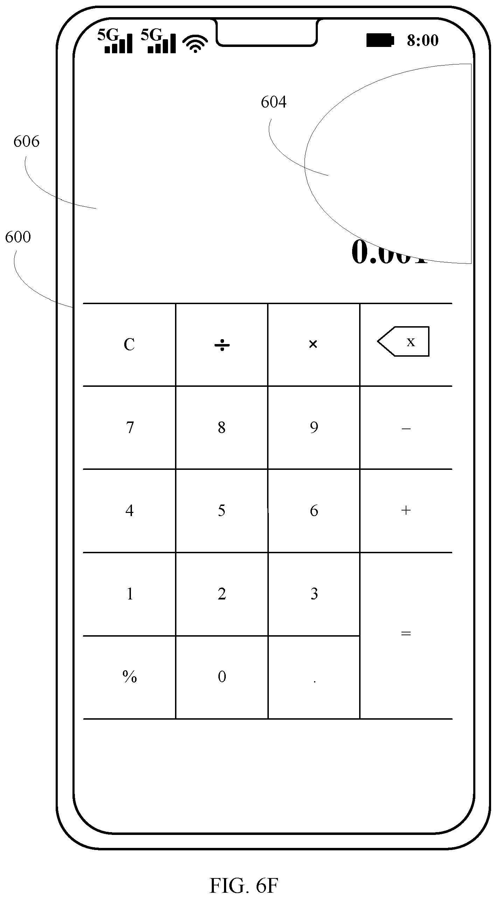

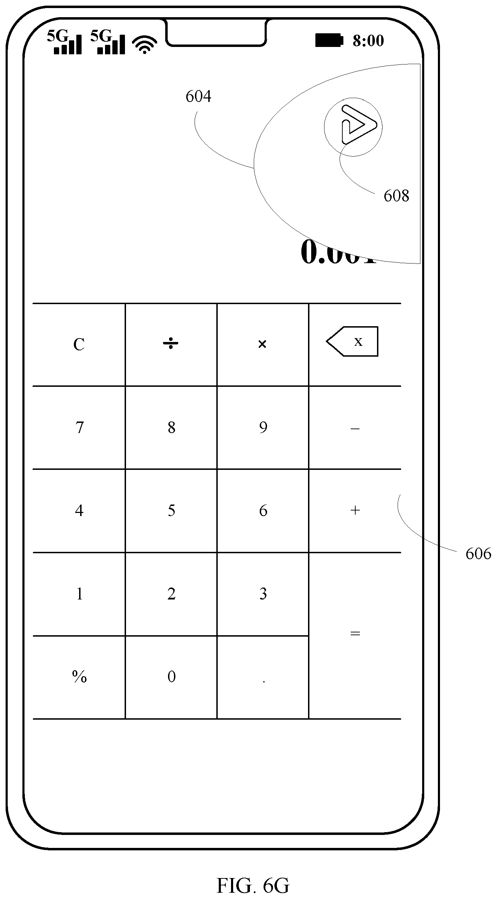

It may be understood that after the electronic device 100 hides the content in the region corresponding to the preset display region 604, the electronic device 100 enters a graphical interface shown in FIG. 6A again. The user may continue to start one or more applications. For example, FIG. 6E is a display interface of a calculator application 606 started by the user. The display interface of the calculator application 606 covers the entire display region 600. The user may operate a graphical interface in FIG. 6E, so that the electronic device 100 displays the application in the background private space. For example, the user 1 may slide leftwards at a preset position of the electronic device 100. Refer to FIG. 6F. The electronic device 100 may display, in response to the sliding operation of the user, the region corresponding to the preset display region 604. After displaying the preset display region, the electronic device may obtain the identity information of the user 1, and perform authentication. If the authentication succeeds, the electronic device displays, in the preset display region 604, an application in the background private space 1. For example, after the authentication succeeds, refer to FIG. 6G. The electronic device 100 may display the identifier 608 of the application 602 in the preset display region 604.

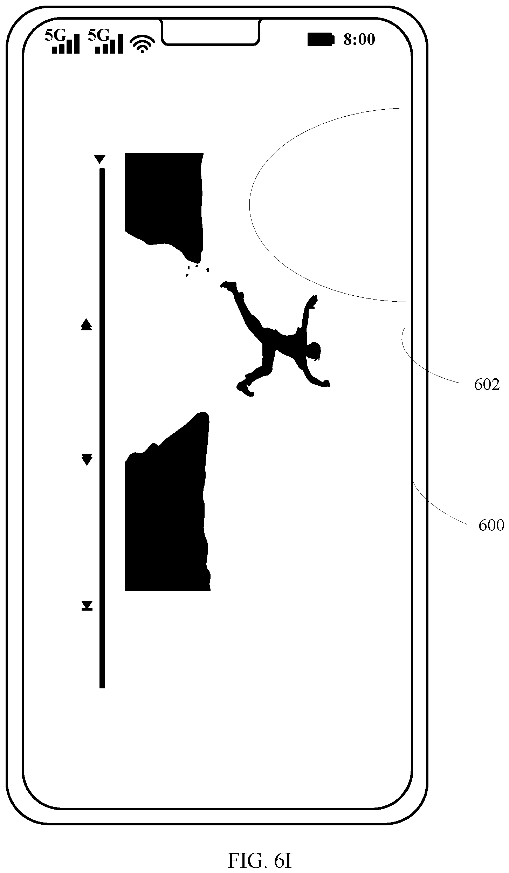

Further, refer to FIG. 6I. On a graphical interface shown in FIG. 6G, the user may drag the identifier 608 of the video application 602 in the preset display region 604 from the preset display region 604 to the display region 600, so that the video application 602 enters the foreground for display.

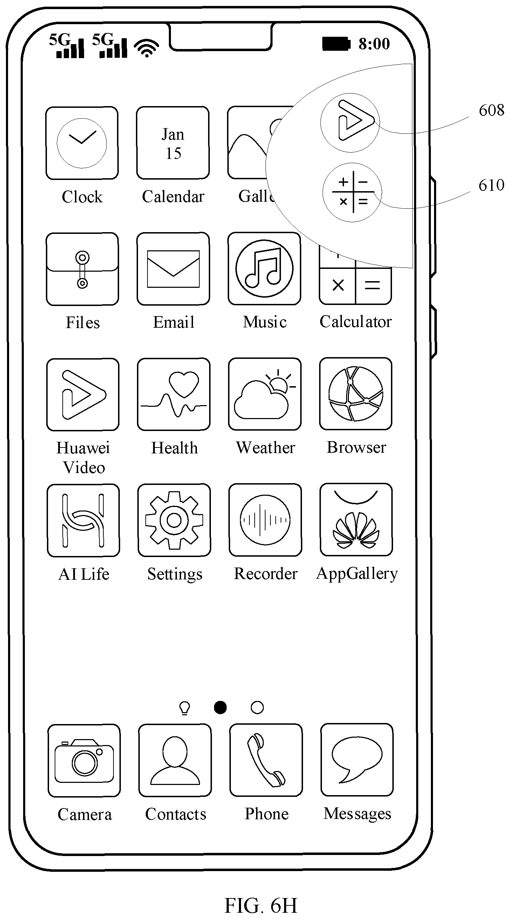

Further, refer to FIG. 6H. On the graphical interface shown in FIG. 6G, the user 1 may drag interface content of the calculator application 606 in the display region 600 to the preset display region 604, so that the calculator application enters the background private space 1 for running, and an identifier 610 of the calculator application 606 is displayed in the preset display region 604.

In the examples shown in FIG. 5A to FIG. 5Q and FIG. 6A to FIG. 6I, the user 1 drags an application displayed in the foreground to the preset display region, so that the application displayed in the foreground enters the background private space 1. The user may continue to drag, from the preset display region, the application in the background private space 1 to a first display region 502 or the entire display region 600, so that the application dragged from the background private space 1 is displayed in the foreground. It should be noted that the user 1 drags the application to the background private space, which is not limited to dragging the application to the preset display region. The user 1 may further switch the application from the foreground to the background private space through another operation. Similarly, a background privacy application may also be switched, in a plurality of manners, to the foreground for display.

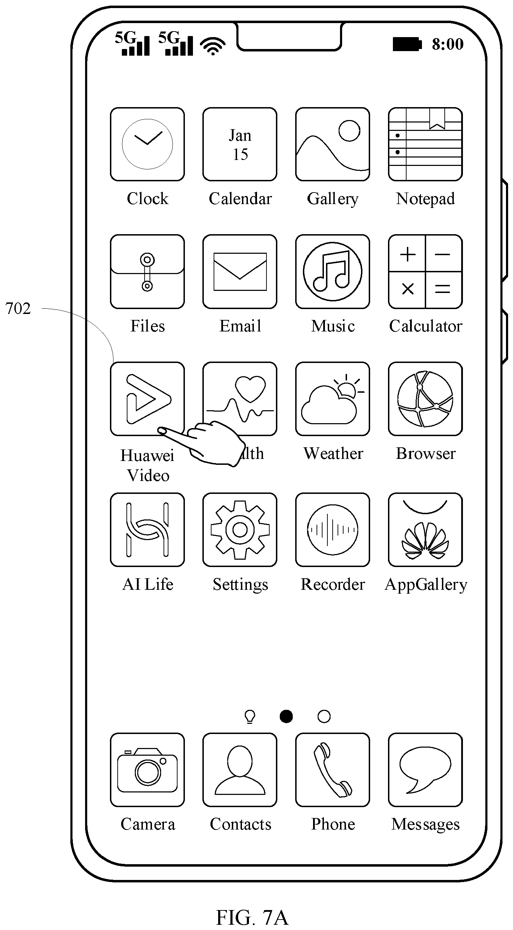

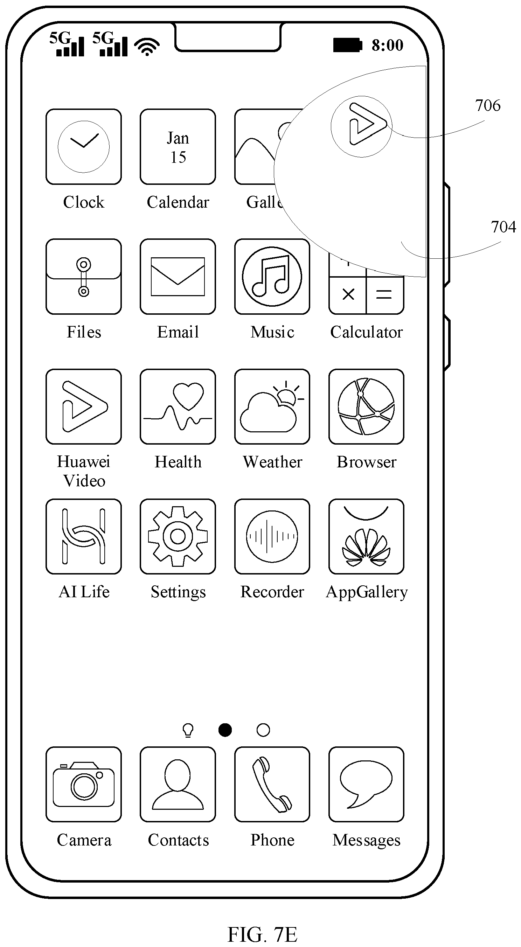

FIG. 7A and FIG. 7E are graphical interfaces of an electronic device 100 according to an embodiment of this application. In the example shown in FIG. 7A to FIG. 7E, in the electronic device, only a user 1 registers a background private space 1, and there is no other private space.

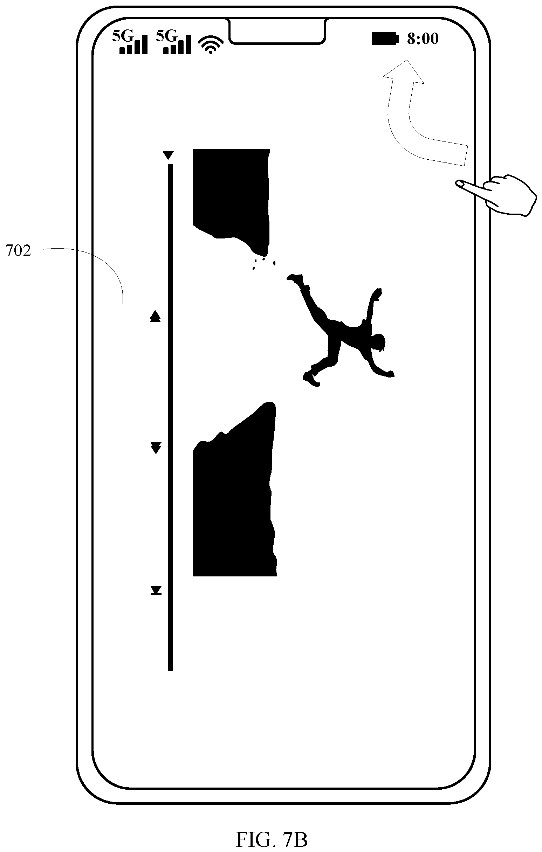

FIG. 7A shows a plurality of applications that may be run by the electronic device 100, for example, "Browser", "Huawei Video", and "Calculator". The electronic device 100 may simultaneously run a plurality of applications. The user may tap an icon of a video application 702. Refer to FIG. 7B. The electronic device 100 may run and display a graphical interface of the video application 702 in response to the tap operation of the user.

In FIG. 7B, the user 1 may drag a window of the application 702 upwards, for example, drag the window of the application 702 to a frame region of the electronic device 100. The electronic device 100 may enable, in response to the dragging operation of the user, the application 702 to enter the background private space 1.

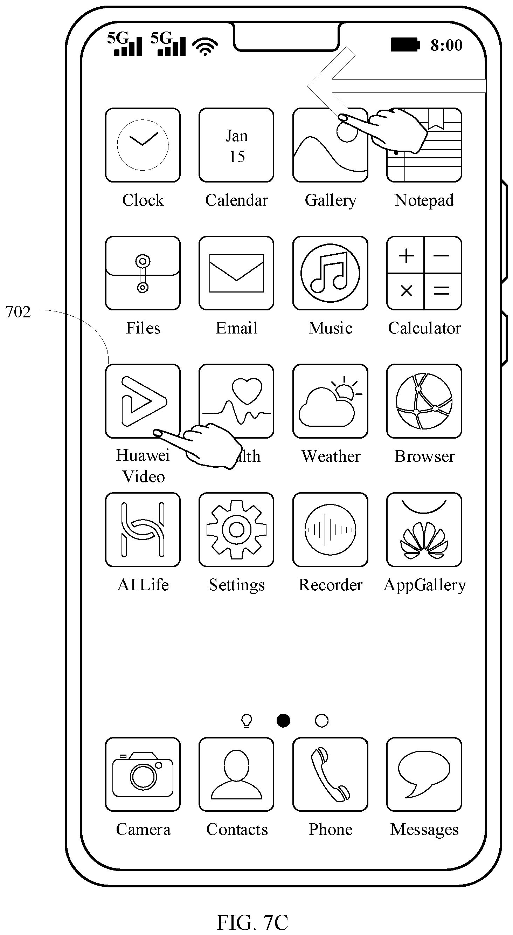

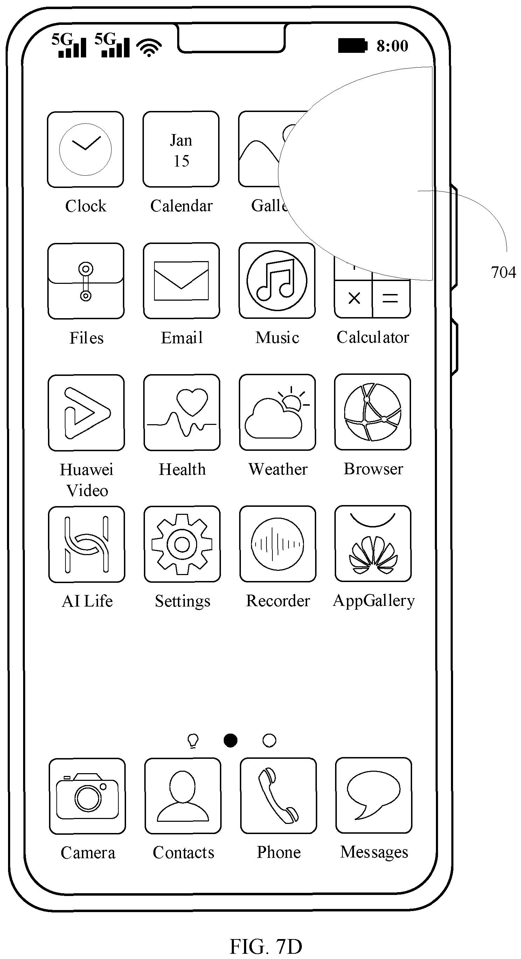

Further, to enable the application 702 in the background private space 1 to be displayed in the foreground, the user 1 needs to operate the electronic device 100, so that the electronic device displays content in a region corresponding to a preset display region. Then, the electronic device 100 collects and authenticates identity information of the user 1. When authentication of the identity information of the user 1 succeeds, the electronic device 100 displays, in the preset display region, an identifier of the application 702 and/or an identifier of another application in the background private space 1. For example, refer to FIG. 7C and FIG. 7D. The user may slide at a preset position of the electronic device 100, for example, slide leftwards. The electronic device 100 may display a preset display region 704 corresponding to the sliding operation of the user. When authenticating the identity information of the user, the electronic device 100 displays, in the preset display region 704, the identifier 706 of the application 702 in the background private space. It may be understood that, with reference to the solution in the embodiment in FIG. 6A to FIG. 6I, the user may operate the application 702 in the background private space, for example, drag the application 702 out of the preset display region 704, so that the application 702 enters the foreground for display from the background private space.

It may be understood that, in the example shown in FIG. 7A to FIG. 7E, the user may enable the foreground application to enter the background private space for running more conveniently.

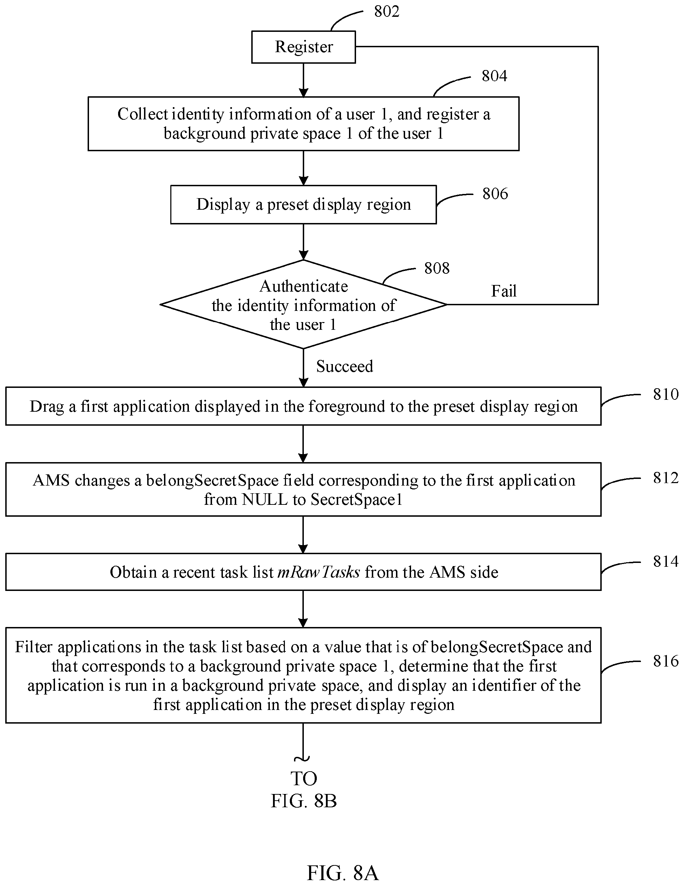

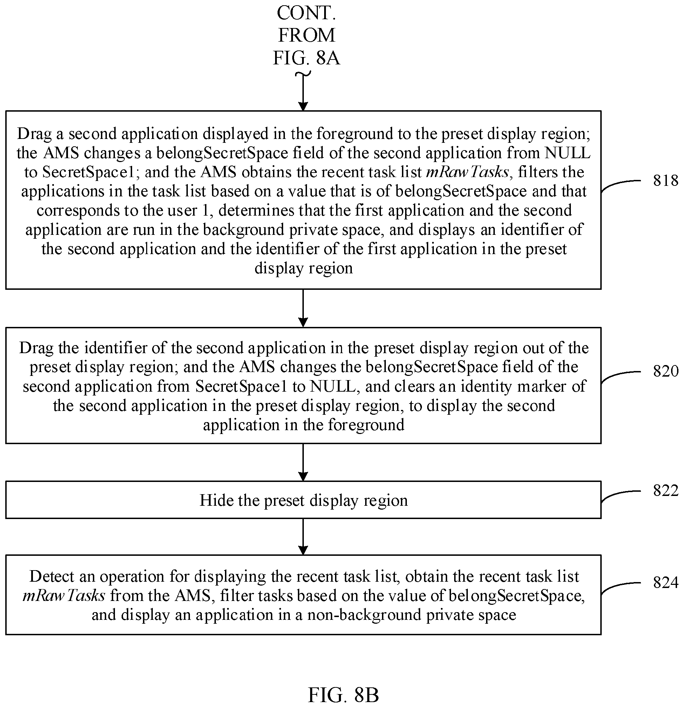

The following describes an application display method shown in this application with reference to FIG. 5A to FIG. 5Q, FIG. 6A to FIG. 6I, and FIG. 8A and FIG. 8B. FIG. 8A and FIG. 8B are a flowchart of an application display method according to an embodiment of this application. The application display method specifically includes:
Step 802: A user 1 registers a background private space on an electronic device 100.

For example, FIG. 5B to FIG. 5D show pages for the user to register the background private space.

Step 804: The electronic device 100 collects identity information of the user 1, and completes registration of a background private space 1 of the user 1.

Each background private space corresponds to one user. The electronic device 100 may differentiate a background private space of a user through unique identity information of the user. As shown above, the identity information of the user 1 may include fingerprint, face and password information, and the like.

Step 806: The electronic device 100 displays a preset region.

The preset region may be a region corresponding to the preset display region 504 shown in FIG. 5B, or the preset region may be a region corresponding to the preset display region 604 shown in FIG. 6C. Specifically, a trigger condition and a trigger method for displaying the preset region by the electronic device are not limited in this application.

Step 808: The electronic device 100 collects the identity information of the user 1, and performs identity authentication.

Specifically, after displaying the preset region, the electronic device may actively prompt the user to enter the identity information. For example, the user may enter a fingerprint into the electronic device. The electronic device 100 may compare the fingerprint entered by the user with a fingerprint entered when the user registers the private space. If the fingerprint entered by the user matches the fingerprint entered when the user registers the private space, the identity authentication succeeds.

Step 810: The electronic device 100 detects an operation of dragging, by the user 1, a first application displayed in the foreground to the preset display region.

The first application is an application currently displayed in the foreground. The user 1 drags the first application displayed in the foreground to the preset display region, so that the first application enters the background private space 1 for running.

Step 812: AMS changes a belongSecretSpace field corresponding to the first application from NULL to SecretSpace1.

A value corresponding to a belongSecretSpace field in the private space 1 is SecretSpace1. SecretSpace1 indicates an application to run in the private space 1. Therefore, after detecting the operation of dragging, by the user 1, the first application displayed in the foreground to the preset display region, the AMS changes the belongSecretSpace field corresponding to the first application from NULL to SecretSpace1.

Step 814: The electronic device 100 obtains a recent task list mRawTasks from the AMS side.

For example, the electronic device 100 may obtain the recent task list mRawTasks by invoking the foregoing first-type interface or in another manner.

Step 816: The electronic device 100 filters applications in the task list based on the value that is of belongSecretSpace and that corresponds to the background private space 1, determines that the first application is run in the background private space, and displays an identifier of the first application in the preset display region.

Step 818: The electronic device 100 drags a second application displayed in the foreground to the preset display region, the AMS changes a belongSecretSpace field of the second application from NULL to SecretSpace1, and the AMS obtains the recent task list mRawTasks, filters the applications in the task list based on a value that is of belongSecretSpace and that corresponds to the user 1, determines that the first application and the second application are run in the background private space, and displays an identifier of the second application and the identifier of the first application in the preset display region.

Step 820: The electronic device 100 detects an operation of dragging, by the user 1, the identifier of the second application in the preset display region out of the preset display region, and the AMS changes the belongSecretSpace field of the second application from SecretSpace1 to NULL, and clears the identifier of the second application in the preset display region, to display the second application in the foreground.

Step 822: The electronic device 100 hides the preset display region.

The electronic device 100 may hide the preset display region in a plurality of manners. This is not limited in this application.

Step 824: The electronic device 100 detects an operation for displaying the recent task list, obtains the recent task list mRawTasks from the AMS, filters tasks based on the value of belongSecretSpace, and displays an application in a non-background private space.

In step 824, the electronic device displays the recent task list based on a recent screen function. To ensure user privacy, when the user displays tasks of the electronic device based on the recent screen function, a task in the private space may not be displayed.

It may be understood that, values of belongSecretSpace of all applications may be NULL except that the value of belongSecretSpace of the first application in the background private space 1 is SecretSpace1, so that the AMS can filter the tasks.

An embodiment of this application further provides a computer-readable storage medium. The computer-readable storage medium includes computer instructions. When the computer instructions are run on an electronic device, the electronic device is enabled to perform the display method provided in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application display method, applied to an electronic device, comprising:
detecting a first operation of a first user on a window of a first application, switching, in response to the first operation, the first application from being displayed in the foreground to being run in the background, and setting the first application as a privacy protection application of the first user, wherein the first application is an application to which the window of the first application belongs;
detecting a second operation for viewing a privacy protection application, and in response to the second operation, obtaining first identity information used for identity authentication; and
matching the first identity information with pre-stored identity information of the first user, and if the first identity information matches the pre-stored identity information of the first user, displaying an identifier of the privacy protection application of the first user, wherein the identifier of the privacy protection application of the first user comprises an identifier of the first application.

2. The display method according to claim 1, wherein after the displaying an identifier of the privacy protection application of the first user, the method further comprises:
detecting a third operation on the identifier of the first application, switching, in response to the third operation, the first application from the background to the foreground, and displaying the window of the first application.

3. The display method according to claim 1, wherein after the displaying an identifier of the privacy protection application of the first user, the method further comprises:
detecting a fourth operation on the identifier of the first application; and
in response to the fourth operation, closing the first application, and setting the first application as a non-privacy protection application.

4. The display method according to any one of claims 1 to 3, wherein the second operation triggers display of a preset display region; and
the identifier of the privacy protection application of the first user is displayed in the preset display region.

5. The display method according to claim 4, wherein before the detecting a first operation of a first user on a window of a first application, the method further comprises: displaying the preset display region; and
the first operation is specifically an operation of dragging the window of the first application to the preset display region.

6. The display method according to claim 4, wherein the method further comprises:
detecting a fifth operation for closing the preset display region; and
in response to the fifth operation, closing the preset display region.

7. The display method according to any one of claims 1 to 6, wherein after the switching the first application from being displayed in the foreground to being run in the background, the method further comprises:
detecting a sixth operation for viewing a recent task list of the electronic device; and
in response to the sixth operation, displaying the recent task list of the electronic device, wherein the recent task list of the electronic device does not comprise the privacy protection application.

8. The display method according to any one of claims 1 to 6, wherein after the switching the first application from being displayed in the foreground to being run in the background, the method further comprises:
detecting a seventh operation for viewing a recent task list of the electronic device; and
in response to the seventh operation, displaying the recent task list of the electronic device, wherein the recent task list of the electronic device comprises the identifier of the privacy protection application, and the identifier of the privacy protection application is displayed in a blurry manner, or the identifier of the privacy protection application is displayed in a preset pattern.

9. The display method according to any one of claims 1 to 6, wherein after the switching the first application from being displayed in the foreground to being run in the background, the method further comprises:
detecting an eighth operation for viewing a recent task list of the electronic device; and
in response to the eighth operation, obtaining second identity information used for identity authentication, matching the second identity information with the pre-stored identity information of the first user, and if the second identity information matches the pre-stored identity information of the first user, displaying the recent task list of the electronic device, wherein the recent task list comprises the identifier of the privacy protection application of the first user; or
in response to the eighth operation, obtaining third identity information used for identity authentication, matching the third identity information with the pre-stored identity information of the first user, and if the third identity information does not match the pre-stored identity information of the first user, displaying the recent task list of the electronic device, wherein the recent task list does not comprise the identifier of the privacy protection application of the first user.

10. The display method according to any one of claims 1 to 9, wherein the identifier comprises any one of an application icon or an application interface screenshot.

11. An electronic device, comprising a processor and a storage device, wherein the storage device stores program instructions; and when the program instructions are run by the processor, the electronic device is enabled to perform the display method according to any one of claims 1 to 9.

12. A computer-readable storage medium, comprising computer instructions, wherein when the computer instructions are run on an electronic device, the electronic device is enabled to perform the display method according to any one of claims 1 to 10.
